(19) **Europäisches Patentamt**

**European Patent Office**

**Office européen des brevets**

(11) Publication number : **0 640 284 A1**

(12) **EUROPEAN PATENT APPLICATION**

(21) Application number : **94306206.7**

(22) Date of filing : **23.08.94**

(51) Int. Cl.⁶ : **A01N 25/26,** A01N 59/16, A01N 25/08

(30) Priority : **30.08.93 JP 235941/93**
**18.04.94 JP 101763/94**

(43) Date of publication of application :
**01.03.95 Bulletin 95/09**

(84) Designated Contracting States :
**DE FR GB IT**

(71) Applicant : **KABUSHIKI KAISHA SANGI**
**11-6, Tsukiji 3-chome,**
**Chuo-ku**
**Tokyo (JP)**

(72) Inventor : **Atsumi, Kiminori, c/o Kabushiki**
**Kaisha Sangi**
**11-6 Tsukiji 3-chome Chuo-ku**
**Tokyo (JP)**
Inventor : **Ishizaki, Tsutomu, c/o Kabushiki**
**Kaisha Sangi**
**11-6 Tsukiji 3-chome Chuo-ku**
**Tokyo (JP)**
Inventor : **Fujita, Keijiro, c/o Kabushiki Kaisha**
**Sangi**
**11-6 Tsukiji 3-chome Chuo-ku**
**Tokyo (JP)**

(74) Representative : **SERJEANTS**
**25, The Crescent**
**King Street**
**Leicester, LE1 6RX (GB)**

(54) **Antibacterial sand.**

(57) An antibacterial sand in which individual particles are coated with an antibacterial inorganic material comprising an antibacterial metal or metal ion on an inorganic carrier. Use for a plant pathogenic germ such as Fusarium, Rhizoctonia, Sclerotinia and Pyshium as a pesticide.

A coloured or white sand is coated with an antibacterial inorganic material carrying an antibacterial metal or metal ion (Ag, Cu or Zn) on an inorganic carrier at rate of from 0.1 to 50% using a silicon based binder and a curing agent with or without a perfume, colouring agent or animal repellent. The amount of the antibacterial inorganic material used is at least 0.1% with respect to the sand.

EP 0 640 284 A1

## Technical Field

The invention relates to antibacterial sand having a natural (white) colour and/or added colouring, and the use thereof against plant pathogenic fungi and bacteria.

## Background Art

Recently, it has become a problem that children are infected with bacteria and roundworm owing to contamination of sandboxes with faeces and urine of a dog or cat. Sterilization and disinfection of the sand with a chemical agent, disinfection under high temperature and mixing with an antibacterial sand have been considered. However, there is a problem of the toxicity of the chemical agent used in the disinfection if present in the sterilization and disinfection under high temperature, and the effective period or life of the sand is relatively short. There is no practical apparatus for disinfection under the high temperature available.

Accordingly, a sand coated with a solution containing an organic substance and silver ion having high antibacterial properties has been developed. The sand is heat-fired, an antibacterial membrane is formed on the suface, and the sand is mixed with a ceramic containing Ag. However, the heat-firing is expensive. On the other hand, when the sands are merely coated with Ag ions or a mixture of an organic substance and Ag ions, the Ag ions are peeled off and present a safety problem. Uniform dispersion on the sand is needed when applying a ceramic containing Ag. When antibacterial sands are used, the effective period is different. Depending on the use and its place, then overall life and period between changes vary.

Plant growth is adversely affected by various bacteria, fungi and the microorganisms so pesticides are used in agriculture. However, no pesticide is known which is effective against all bacteria, fungi and microorganisms. No pesticide effective against plant pathogenic germs such as Rhizoctonia, Fusarium and Sclerotinia, by which turf, orchids and cyclamens are affected, is known which does not have adverse influences. Accordingly, a pesticide having high effect and being friendly to the environment is needed.

## The Invention

The invention provides an antibacterial sand, in which individual particles are coated with an antibacterial inorganic material comprising antibacterial metal or metal ion on an inorganic carrier. A stable silicon compound, such as water glass or silane, and a curing agent therefor may be coated with the antibacterial inorganic material. Perfume, colouring agent and animal repellent also may coexist with the antibacterial inorganic material. Sand having lasting antibacterial properties can thus be produced according to the invention.

Any metal or metal ion having antibacterial properties may be used, but at least one metal or metal ion having relatively high stability and selected from Ag, Cu and Zn is preferred. The inorganic carrier is suitably selected from a zeolite, silica, calcium carbonate, aluminium phosphate, zinc phosphate, zirconium phosphate and a calcium phosphate-based compound such as calcium triphosphate, calcium hydrogen phosphate, calcium pyrophosphate, calcium metaphosphate, hydroxyapatite or halogenoapatite.

The inorganic carrier is generally added to an aqueous solution containing the antibacterial metal salt, and stirred. The metal salt is taken up on the inorganic carrier by adsorbtion or ion-exchange. The resulting inorganic carrier is collected, washed with water, dried, heat-fired if necessary and crushed.

The amount of the metal salt depends on the concentration of the antibacterial metal salt to be used, the treatment time and temperature. When the amount of the metal or metal ion on the inorganic carrier is more than 0.001% by weight with respect to the inorganic carrier, the antibacterial property is sufficient. Preferably the amount is from 0.01% to 50% of the carrier by weight.

The antibacterial inorganic material can be obtained from a coexisting antibacterial metal salt in the reaction system by which the carrier is produced. For example, in the reaction system by which calcium hydrogen phosphate is produced by reacting $CaCl_2$ with $Na_2HPO_4$ in an acidic solution, calcium hydrogen phosphate carrying Ag can be obtained from $AgNO_3$ which is also present. When the antibacterial inorganic material is produced in such a process, a greater amount of the antibacterial metal or metal ion can be carried on the carrier. When there is an excess of the antibacterial metal salt, the free metal salts are mixed with the inorganic carrier, and cannot be removed by washing with water. When washed with water, the antibacterial metal or metal ion may be eluted. Then the amount of the antibacterial metal salt coexisting needs to be controlled so as to make the amount of the antibacterial metal salt to be carried up to 0.01 to 50% by weight with respect to the inorganic carrier.

From the antibacterial inorganic material so produced, the antibacterial metal or metal ion is hardly eluted in the water. When the antibacterial inorganic material has been heat-fired, the bonding strength between the carrier and the antibacterial metal or metal ion is strengthened. The antibacterial metal ion cannot be eluted and the antibacterial inorganic material can be used safely.

The sands are coated with the antibacterial inorganic material using a stable silicon compound as a binder. For example, the sand is added to a solution containing water glass or silane, mixed in a mixer, and the sand is thus coated with the binder. After that, the antibacterial inorganic material is added, mixed in a mixer, removed from the mixer, dried and the antibacterial sand is produced. Generally, when a large amount of binder in relation to the sand is used, a large amount of the antibacterial inorganic material adheres. When a small amount of binder is used, a small amount of the antibacterial inorganic material adheres. Accordingly, it is possible to control the amount of the antibacterial inorganic material adhering by suitably selecting the amount of the binder.

If the specific gravity of the antibacterial sand uniformly adhering to a small amount of the antibacterial inorganic material is similar to that of the sand, its dispersion in the sand is good, the antibacterial inorganic material is not peeled off, and antibacterial sand of good durability is obtained. The adhered amount of the antibacterial inorganic material is from 0.05 to 40%, preferably 0.1 to 30%, by weight with respect to the sand.

The antibacterial sand according to the invention can be used in any places in which sand is generally used. A river sand from grey to black in colour and available in Japan can be used as the sand. Alternatively, white sands imported from Viet Nam or Australia for use in materials such as glass can be used. The use of white sand is preferable in some case, because the white antibacterial sand is easily obtained and has a clean feeling owing to its white colour. Further, the antibacterial material is hardly peeled off owing to the high adhering effect, the high silica purity and low impurities in the white sand.

When the sand is coated with the antibacterial inorganic material, the antibacterial capacity of the antibacterial sand obtained is increased by adding a tetravalent metal compound such as $Ti(SO_4)_2$, $TiCl_4$, $Zr(SO_4)_2$, $ZrCl_4$, $Zr(NO_3)_4$, and $Zr(CH_3COO)_4$ as a curing agent.

Antibacterial sand according to the invention can be sprinkled on the sand in a sandbox, and antibacterial capacity so provided to the sand in the sandbox. During use, the antibacterial sand becomes mixed with the other sand, and its antibacterial capacity is gradually degraded. When only antibacterial sand is used, soil and dust from outside become mixed there and the antibacterial material is peeled off, the fine antibacterial sand is washed away with rain and the antibacterial property is gradually diluted. The antibacterial capacity of the sand needs to be measured to estimate the antibacterial capacity, but this is difficult and the time for changing or adding the antibacterial sand cannot accurately be judged.

It can be convenient to use an antibacterial sand having a different colour from the other sand, so that the drop in the antibacterial capacity can be measured by looking at the colour change. When white antibacterial sand is used, it is an advantage that the colouring process is not needed. Perfume, colouring agent and/or a repellent for birds, dogs and cats can be added to the binder. The changing or adding time for the antibacterial sand can be confirmed by its change of colour or odour.

Terpene based essential oils such as limonene, linalool, and citral have a repellent effect for animals, so their addition to the antibacterial sand discourages animals from coming close, and the antibacterial sand is thus protected from the contamination of urine and faeces.

The effect can be achieved by adding a small amount of the essential oil.

The antibacterial sand of the invention has a strong antibacterial capacity for plant pathogenic germs such as Rhizoctonia, Fusarium, Pyshium and Sclerotinia. Although plant growth is remarkably inhibited by these germs, a suitable pesticide does not at present exist. For example, turf, orchids and cyclamen are adversely affected, and TPN, Captan, and TMTD are generally used on the golf links as a pesticide, but such pesticides are not selective and adversely affect the environment, while their antibacterial effect on these germs is weak. Accordingly, when the antibacterial sand is mixed with the soil, the disease in the conditions of the plant generated by those germs, which cannot be controlled by the known pesticides, is restricted. The plant is tended normally, the antibacterial metal present in the antibacterial sand is not separated and diffused in to the soil, and the environment is not contaminated.

The growth of the plant is not affected by the antibacterial sand so the amount of the antibacterial sand to be added to the soil is not limited. However, when only a small amount is added, the antibacterial capacity is low so the amount of the antibacterial sand to be added should be at least 0.1% with respect to the soil by weight, preferably 0.5% or more.


Examples


The sorts of the antibacterial inorganic material used in Examples are in Table 1. Those antibacterial inorganic materials are produced according to the invention and used in an un-heat-fired condition. The numerals in Table 1 show % of each metal on the carrier by weight.

Antibacterial sands were prepared by the following methods using the inorganic materials in Table 1.

1. Samples 1,4 and 11

Water glass is added to water in an equal amount. the antibacterial inorganic material, perfume, colouring agent or animal repellent is added so as to make the amount shown in Table 2. The sand is added to the solution containing water glass to make the content of water glass up to 1% with respect to the sand. The mixture is dried and the antibacterial sand is obtained.

2. Samples 2,3,5 and 12

10% and 15% of water glass are added to the sand and mixed. The antibacterial inorganic materials, perfume, colouring agent or repellent are added and mixed in. Thus the antibacterial sand is obtained.

3. Samples 6,9 and 14

A solution containing the antibacterial inorganic material, perfume, colouring agent or the repellent is added to an alcohol-aqueous solution containing 0.5% of vinylsilane. The amount of the antibacterial inorganic material, perfume, colouring agent or the repellent is adjusted to that in Table 2. Solution sufficient to add 10% by weight is added to the same and mixed. After that, 0.1% HCl is added, mixed again, dried, and the antibacterial sand is obtained.

4. Samples 7,8,10 and 13

5% of methacrylsilane and 15% of the aqueous alcohol solution are added to the sand and mixed. After that, 0.5% of HCl is added, it is mixed again and the antibacterial inorganic material, perfume, colouring agent or the repellent is added to the amount in Table 2. It is mixed, dried and the antibacterial sand is obtained.

Antibacterial tests

The antibacterial sands obtained with Samples 1 to 14 are added to a normal, untreated sand at the rate of 5%. 1 ml of sterilized water and 0.1 ml of a solution containing $1 \times 10^7$/ml of a colon bacillus are added to 10 g of the mixed sand. The sand is incubated at 25°C for 24 hours. The colon content is investigated and cannot be detected.

Water is passed through the sands obtained from Samples 3 to 14. When the odour of the sand is diluted with respect to Samples 3,4,7 and 8, and when the colour becomes light with respect to Samples 11 and 12, the sands are removed and the antibacterial test is performed. As a comparison, an antibacterial test was performed using the sand before the odour and colour were diluted. The antibacterial test is carried out after 3000 mm/cm² (coverage rainfall for about 2 years) of the water is passed through Samples 13 and 14. As shown in Table 3, the antibacterial properties are degraded, when the odour and colour become light in the antibacterial sand.

Example 2

White sand was coated by adding hydroxyapatite containing 2% Ag, 0.5%, water glass, 1% as the binder and Ti(SO$_4$)$_2$, 1%.

Example 3

White sand was coated by adding hydroxyapatite containing 2% Ag, 5%, water glass, 5% as the binder and Ti(SO$_4$)$_2$, 10%.

Example 4

White sand was coated by adding hydroxyapatite containing 2% Ag, 0.5%, and water glass, 1% as the binder.

Example 5

White sand was coated by adding hydroxyapatite containing 2% Ag, 5% and water glass, 5%.

Example 6

River sand was coated by adding hydroxyapatite containing 2% Ag, 0.5%, water glass, 1% as the binder and Ti(SO$_4$)$_2$, 1%.

Example 7

River sand was coated by adding hydroxyapatite containing 2% Ag, 5%, water glass 5% as the binder and $Ti(SO_4)_2$, 10%.

Example 8

River sand was coated by adding hydroxyapatite containing 2% Ag, 0.5%, and water glass, 1% as the binder.

Example 9

River sand was coated by adding hydroxyapatite containing 2% Ag, 5%, and water glass 5% as the binder.

Example 10

The sands obtained in Examples 2 to 9 were mixed and washed with 4500 mm/cm² flowing water (corresponding to water flowing for about 3 years) and 7500 mm/cm² (corresponding to water flowing for about 5 years). After that, the antibacterial test was performed and the result is shown in Table 4.

When compared with river sand, white sand using water glass as the binder has good durability for antibacterial activity, and the effect lasts in both the white and river sands when $Ti(SO_4)_2$ is added as the curing agent.

A test was performed using sand coated with 0.5% of hydroxyapatite carrying 2% Ag using water glass as the binder. The sand was mixed to a potato dextrose agar medium at the rates of 0.1%, 0.5%, 1.0% and 5.0% in a petri dish. The pathogenic germs, Fusarium, Rhizoctonia and Sclerotinia were each incubated in a centre of the medium. The growth of germs was observed after culture for a week at 20°C in an incubator. When the concentration of the same was 0.1% or more, growth was not observed in any of the germs.

The same test as immediately above was performed except for that calcium triphosphate carrying 3% of Cu was used in place of hydroxyapatite carrying 2% of Ag. When the concentration in the sand was 0.1%, the germs grew, but when it was 0.5% or more, the germs did not grow.

The antibacterial sands used in the tests above were mixed in soil sterilized by dry heating in a proportion of 10%, and turf, symbidium and cyclamen were planted in 10 pots. Fusarium germ was innoculated into the cyclamen and symbidium, and Rhizoctonia and Pyshium germs were innoculated into the turf. Cyclamen and symbidium were cultivated for 3 months, the turf was cultivated for 1 year and the disease conditions were observed. For comparison, the same test was done using soil sterilized by dryheating. The results are shown in Table 5. The antibacterial sand is very effective against plant pathogenic damage.

Table 1

| Sample | Ag | Cu | Zn | Carrier |
|---|---|---|---|---|
| 1 | 0.5 | | | hydroxyapatite |
| 2 | 3 | 8 | | calcium triphosphate |
| 3 | 2 | | 1 | zeolite |
| 4 | 0.1 | | | hydroxyapatite |
| 5 | 2 | | | zirconium phosphate |
| 6 | 1 | | | fluoroapatite |
| 7 | 1 | 2 | | zinc phosphate |
| 8 | | 30 | | calcium pyrophosphate |
| 9 | | 5 | | silica |
| 10 | | 20 | 30 | calcium metaphosphate |
| 11 | | 5 | 5 | calcium carbonate |
| 12 | 0.1 | | 0.1 | calcium triphosphate |
| 13 | | 10 | 5 | aluminium phosphate |
| 14 | 2 | | 2 | calcium hydrogen phosphate |

Table 2

| Sample | Amount of antibacterial material shown in Table 1 added to the sand (%) | perfume, animal repellent, coloring agent | Added amount to the sand (%) |
|---|---|---|---|
| 1 | 30 | | |
| 2 | 0.2 | | |
| 3 | 1 | ethyl iso valerianate | trace |
| 4 | 20 | cinnamic acid | 0.5 |
| 5 | 2 | food dye green 3 aluminium lake | 1 |
| 6 | 5 | food dye red 2 aluminium lake | 1.4 |
| | | food dye yellow 5 aluminium lake | 0.6 |
| 7 | 1 | cinnamic acid | 0.2 |
| | | food dye yellow 4 aluminium lake | 5 |
| 8 | 0.5 | geraniol | trace |
| | | food dye red 2 aluminium lake | 0.5 |
| 9 | 30 | limonene | 5 |
| 10 | 0.1 | citral | 2 |
| 11 | 20 | linalool | 0.1 |
| | | ferric oxide | 0.1 |
| 12 | 10 | limonene | 0.5 |
| | | food dye yellow 4 aluminium lake | 2.4 |
| | | food dye blue 1 aluminium lake | 0.6 |
| 13 | 10 | | |
| 14 | 0.5 | | |

Table 3

| sample | number of living germs (/ml) | | |
|---|---|---|---|
| | original antibacterial sand | antibacterial sand in use | antibacterial sand after use |
| 1 | 0 | 0 | |
| 2 | 0 | 0 | |
| 3 | 0 | 0 | $6.0 \times 10^5$ |
| 4 | 0 | 0 | $3.2 \times 10^4$ |
| 5 | 0 | 0 | $2.8 \times 10^5$ |
| 6 | 0 | 0 | $5.1 \times 10^4$ |
| 7 | 0 | 0 | $9.4 \times 10^5$ |
| 8 | 0 | 0 | $8.5 \times 10^5$ |
| 9 | 0 | 0 | $4.0 \times 10^5$ |
| 10 | 0 | 0 | $1.3 \times 10^6$ |
| 11 | 0 | 0 | $3.7 \times 10^4$ |
| 12 | 0 | 0 | $5.4 \times 10^6$ |
| 13 | 0 | 0 | |
| 14 | 0 | 0 | |

Table 4

| Sample | number of living germs (/ml) | | |
|---|---|---|---|
| | original antibacterial sand | antibacterial sand after rainfall amounts for 3 years | antibacterial sand after rainfall amounts for 5 years |
| Example 2 | 0 | 0 | 0 |
| Example 3 | 0 | 0 | 0 |
| Example 4 | 0 | 0 | $1.5 \times 10^3$ |
| Example 5 | 0 | 0 | $1.9 \times 10^2$ |
| Example 6 | 0 | 0 | $5.0 \times 10^2$ |
| Example 7 | 0 | 0 | 260 |
| Example 8 | 0 | $5.7 \times 10^6$ | $8.3 \times 10^6$ |
| Example 9 | 0 | $1.4 \times 10^6$ | $7.7 \times 10^6$ |

Table 5

| plant | germ | antibacterial sand carrying Ag | | antibacterial sand carrying Cu | | comparison | |
|---|---|---|---|---|---|---|---|
| | | normal | disease | normal | disease | normal | disease |
| cyclamen | Fusarium | 8 | 2 | 7 | 3 | 2 | 8 |
| symbidium | Fusarium | 7 | 3 | 7 | 3 | 1 | 9 |
| turf | Rhizoctonia | 9 | 1 | 9 | 1 | 4 | 6 |
| turf | Pyshium | 7 | 3 | 6 | 4 | 3 | 7 |

**Claims**

1. An antibacterial sand in which individual particles are coated with an antibacterial inorganic material comprising an antibacterial metal or metal ion on an inorganic carrier.

9

2. An antibacterial sand according to claim 1 in which the sand is white.

3. An antibacterial sand according to claims 1 or 2 containing a perfume and/or colouring agent.

4. An antibacterial sand according to any preceding claim containing an animal repellent.

5. An antibacterial sand according to any preceding claim in which the antibacterial metal or metal ion is Ag, Cu or Zn.

6. An antibacterial sand according to any preceding claim in which the inorganic carrier is a calcium phosphate-based compound, zeolite, silica, calcium carbonate, zinc phosphate, aluminium phosphate or zirconium phosphate.

7. An antibacterial sand according to claim 6 in which the calcium phosphate-based compound is calcium triphosphate, calcium hydrogen phosphate, calcium pyrophosphate, calcium metaphosphate, hydroxyapatite or halogenoapatite.

8. An antibacterial sand according to any preceding claim containing as a coating agent water glass or silane.

9. An antibacterial sand according to claim 8 containing $Ti(SO_4)_2$, $TiCl_4$, $Zn(SO_4)_2$, $ZnCl_4$, $Zn(NO_3)_4$ or $Zr(CH_3COO)_4$ as a curing agent.

10. An antibacterial sand according to any preceding claim containing antibacterial inorganic material to an extent of at least 0.1% with respect to a sand.

11. An antibacterial sand according to any preceding claim containing an antibacterial metal or metal ion to an extent of 0.1 to 50% with respect to the inorganic carrier by weight.

12. The use of an antibacterial sand according to any preceding claim as a pesticide for plant pathogenic germs such as Rhizoctonia, Fusarium, Sclerotinia or Pyshium.

13. A soil containing an antibacterial sand according to any of claims 1 to 12.

14. A soil according to claim 13 in which the antibacterial sand is present to an extent of at least 0.1% by weight.

EP 0 640 284 A1

| European Patent Office | EUROPEAN SEARCH REPORT | Application Number |
|---|---|---|

| DOCUMENTS CONSIDERED TO BE RELEVANT | | EP 94306206.7 | |
|---|---|---|---|
| Category | Citation of document with indication, where appropriate, of relevant passages | Relevant to claim | CLASSIFICATION OF THE APPLICATION (Int. Cl. 6) |
| X | PATENT ABSTRACTS OF JAPAN, unexamined applications, C section, vol. 15, no. 92, March 6, 1991 THE PATENT OFFICE JAPANESE GOVERNMENT page 93 C 811; & JP-A-02 306 904 (YOSHIO ICHIKAWA) -- | 1,2, 5-7 | A 01 N 25/26 A 01 N 59/16 A 01 N 25/08 |
| P,A | PATENT ABSTRACTS OF JAPAN, unexamined applications, C section, vol. 18, no. 347, June 30, 1994 THE PATENT OFFICE JAPANESE GOVERNMENT page 82 C 1219; & JP-A-06 087 715 (MITSUBISHI MATERIALS CORP) -- | 1,2,5, 7 | |
| P,A | PATENT ABSTRACTS OF JAPAN, unexamined applications, C section, vol. 18, no. 236, May 6, 1994 THE PATENT OFFICE JAPANESE GOVERNMENT page 17 C 1196; & JP-A-06 024 920 (NAKAMURA BUSSAN K.K.) -- | 1,5 | TECHNICAL FIELDS SEARCHED (Int. Cl.6) A 01 N |
| P,A | PATENT ABSTRACTS OF JAPAN, unexamined applications, C section, vol. 18, no. 114, February 24, 1994 THE PATENT OFFICE JAPANESE GOVERNMENT page 15 C 1171; & JP-A-05 306 207 (MATSUSHITA ELECTRIC IND CO LTD) -- | 1,5 | |

The present search report has been drawn up for all claims

| Place of search | Date of completion of the search | Examiner |
|---|---|---|
| VIENNA | 08-11-1994 | SCHNASS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

**European Patent Office**

## EUROPEAN SEARCH REPORT

Application Number

-2-
EP 94306206.7

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 6) |
|---|---|---|---|
| P,A | PATENT ABSTRACTS OF JAPAN, unexamined applications, C section, vol. 17, no. 489, September 6, 1993 THE PATENT OFFICE JAPANESE GOVERNMENT page 128 C 1106; & JP-A-05 124 905 (MATSUSHITA ELECTRIC IND CO LTD) | 1,5 | |
| A | PATENT ABSTRACTS OF JAPAN, unexamined applications, C section, vol. 16, no. 383, August 17, 1992 THE PATENT OFFICE JAPANESE GOVERNMENT page 118 C 974; & JP-A-04 124 102 (SINTOKOGIO LTD) | 1,2, 5-8 | |
| | | | TECHNICAL FIELDS SEARCHED (Int. Cl. 6) |

The present search report has been drawn up for all claims

| Place of search | Date of completion of the search | Examiner |
|---|---|---|
| VIENNA | 08-11-1994 | SCHNASS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)